# FASCICULE DE BREVET EUROPEEN

(11) **EP 1 107 503 B1**
(45) Date de publication et mention de la délivrance du brevet: **16.08.2006**
(21) Numéro de dépôt: 00403339.5
(22) Date de dépôt: 29.11.2000
(51) Int. Cl.: H04L 9/08, H04L 9/00

(54) **Composant électronique de sécurité**
Elektronischer Sicherheitsbaustein
Electronic security component

(30) Priorité: 30.11.1999 FR 9915115
(43) Date de publication de la demande: 13.06.2001
(73) Titulaire: STMicroelectronics S.A., 92120 Montrouge (FR)
(72) Inventeur: Pomet, Alain, Cabinet BALLOT, 94230 Cachan (FR); Plessier, Bernard, Cabinet BALLOT, 94230 Cachan (FR); Sourgen, Laurent, Cabinet BALLOT, 94230 Cachan (FR)
(74) Mandataire: Ballot, Paul Denis Jacques

(56) Documents cités:
- US-A- 5 867 579

## Description

La présente invention concerne un composant électronique de sécurité. Elle concerne toutes les applications dans lesquelles des informations sensibles sont traitées.

De tels composants sont notamment utilisés dans des cartes à puces, pour certaines applications de celles-ci, par exemple pour l'accès à des banques de données, pour des applications bancaires, ou encore des applications de télé péage pour la télévision, la distribution d'essence ou le passage de péages d'autoroutes.

Ces composants sont amenés à traiter des données confidentielles, qu'il faut préserver de toute tentative d'espionnage aux fins de fraude. Ces données confidentielles transitent par le bus de données du composant, entre une unité centrale de traitement (processeur) et des périphériques tels que des mémoires. Un composant qui traite des données confidentielles transitant par un bus de données est décrit dans le document de brevet américan US 5867579.

Or différents moyens peuvent être mis en oeuvre pour découvrir ces données confidentielles. Notamment, une caractéristique physique observable de l'extérieur du composant électronique est sa signature en courant, fonction des transitions sur le bus de données. En effet, le bus de données a une grosse capacité du fait qu'il circule dans tout le composant. Pour cette raison, l'interface de sortie comprend des commutateurs trois états dimensionnés pour passer un fort courant, permettant de charger ou décharger la capacité de ligne. S'agissant d'un bus de données 8 bits, ce sont alors 8 gros commutateurs qui sont activés pour appliquer une donnée sur ce bus, avec une consommation en courant importante à la commutation.

Un objet de l'invention est d'empêcher ou de rendre plus difficile la détermination des données qui transitent sur le bus.

Un objet de l'invention est d'utiliser le cryptage des données pour améliorer la protection des données confidentielles.

Un autre objet de l'invention, est de mettre en oeuvre un cryptage de données d'une manière peu coûteuse, que ce soit en surface silicium, en lignes de connexion entre les périphériques et l'unité centrale et en temps de traitement des données.

Un autre objet de l'invention est de mettre en oeuvre un cryptage de données adaptable à toutes les familles de composant de façon simple, sans surcoût de conception personnalisée.

Une solution à ces différents problèmes techniques a été trouvée dans l'invention dans un composant dont l'unité centrale et les périphériques ayant à traiter des données sensibles reçues ou transmises sur le bus de données comprennent chacun une cellule de cryptage/décryptage et qui applique à une donnée reçue ou à transmettre dans un cycle horloge une même clé secrète produite localement par chaque cellule, à chaque cycle horloge.

Si on retient la convention selon laquelle un cycle horloge débute sur le niveau haut, l'écriture d'une donnée sur le bus se fait sur le niveau bas et la lecture d'une donnée sur le bus se fait sur le front montant. Ainsi, dans un cycle d'horloge donné, une donnée peut être cryptée avec une clé secrète produite par la cellule d'un émetteur et transmise sur le bus pendant la période d'écriture sur le bus et cette donnée cryptée peut être lue par un destinataire et décryptée dans la cellule de ce destinataire avec la clé secrète produite localement par cette cellule, les deux clés secrètes produites localement ayant la particularité d'être identiques. Ainsi, selon l'invention, la clé secrète est produite localement dans chaque cellule à partir d'un signal aléatoire synchrone appliqué à toutes, pour servir dans un même cycle horloge au cryptage d'une donnée fournie par un émetteur et au décryptage de cette donnée cryptée par un destinataire.

Telle que caractérisée, l'invention concerne donc un composant électronique comprenant un bus bidirectionnel par lequel transitent des données entre des périphériques et une unité centrale à la cadence d'un signal d'horloge, caractérisé en ce que l'unité centrale et au moins l'un des périphériques comprennent chacun une cellule de cryptage/décryptage des données utilisant une même clé secrète, une valeur courante de ladite clé secrète étant produite localement dans chaque cellule à chaque cycle horloge à partir d'un signal aléatoire synchrone du signal d'horloge, appliqué à chacune des cellules par une ligne de transmission unidirectionnelle.

D'autres caractéristiques et avantages de l'invention sont détaillés dans la description suivante à titre indicatif et non limitatif, et en référence aux dessins annexés dans lesquels :
- la figure 1 représente un exemple d'architecture d'un composant électronique auquel l'invention peut s'appliquer;
- la figure 2 représente une architecture simplifiée d'un composant électronique selon l'invention;
- la figure 3 est un exemple de chronogramme des signaux de données et de commande du composant électronique représenté à la figure 2 ;
- la figure 4 est un schéma bloc d'une cellule de cryptage/décryptage selon l'invention ;
- la figure 5 représente la cellule de cryptage/décryptage comprenant un circuit conditionnel selon un perfectionnement de l'invention, applicable à l'unité centrale;
- la figure 6 est un schéma détaillé des moyens de cryptage et de décryptage dans une cellule et;
- la figure 7 représente un schéma bloc d'un générateur de signal aléatoire synchrone qui peut être utilisé dans l'invention.

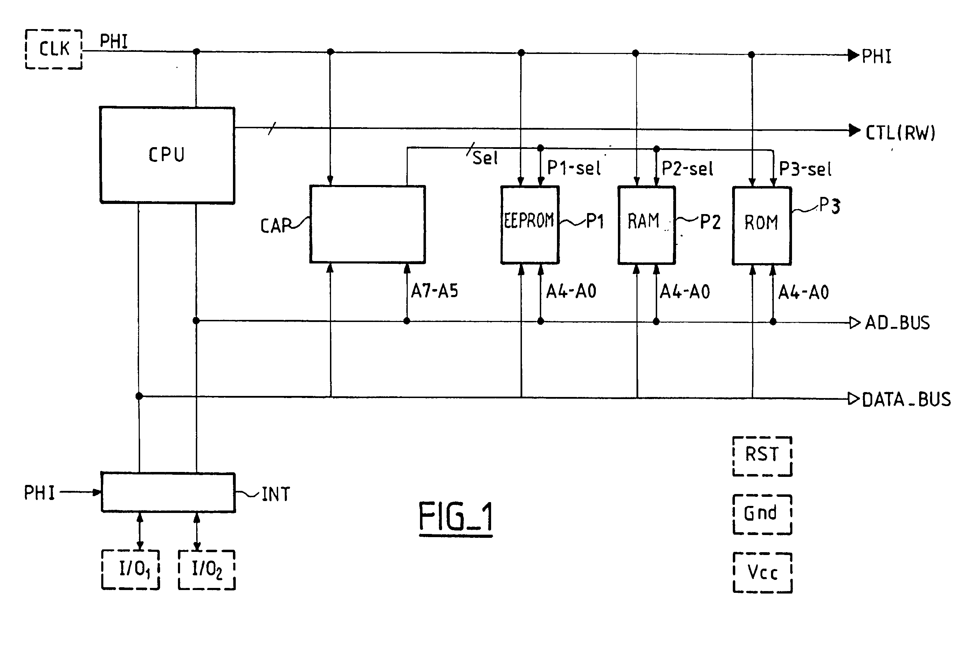

La figure 1 représente un exemple d'architecture d'un composant électronique de sécurité auquel l'invention peut s'appliquer. Dans cet exemple, le composant électronique est plus particulièrement destiné aux applications de type carte à puce. Ses connexions externes se limitent ainsi à deux plots d'entrée/sortie série, un plot horloge CLK pour recevoir un signal d'horloge externe, un plot pour recevoir un signal d'initialisation RST et les plots d'alimentation logique, Vcc et Gnd.

L'architecture de ce composant comprend une unité centrale CPU, et des périphériques P1, P2, P3, qui sont dans l'exemple, respectivement, une mémoire non volatile, par exemple de type EEPROM, une mémoire de travail de type RAM et une mémoire programme, de type ROM.

Un circuit d'interface INT assure l'interface entre les plots d'entrée/sortie série et le bus parallèle du composant qui se décompose en un bus d'adresse, AD-BUS et un bus de donnée DATA-BUS auxquels sont connectés l'unité centrale et les périphériques.

Dans cette architecture, on a aussi prévu un circuit CAP de contrôle d'accès au périphérique qui reçoit les bits de poids forts A7-A5 du bus d'adresse AD-BUS. Il contient une table d'allocation de l'espace physique adressable du composant et fournit notamment les signaux de sélection P1-sel, P2-sel et P3-sel des périphériques P1, P2, P3, en fonction de l'adresse décodée. Dans cette exemple, les périphériques ne reçoivent que les bits de poids faibles A5-A0 du bus d'adresse.

En fonction des instructions que l'unité centrale reçoit de l'extérieur, elle fournit des signaux de contrôle CTL, notamment, un signal de lecture/écriture RW, appliqués aux périphériques. Enfin, le plot CLK fournit le signal d'horloge PHI appliqué à tous les circuits du composant, soit dans l'exemple à l'unité centrale, aux périphériques, au circuit d'interface et au circuit de contrôle d'accès aux périphériques.

Dans l'invention, on cherche à sécuriser ce circuit, en empêchant la détermination des données qui transitent sur le bus de donnée interne DATA-BUS, par observation de la consommation en courant du composant.

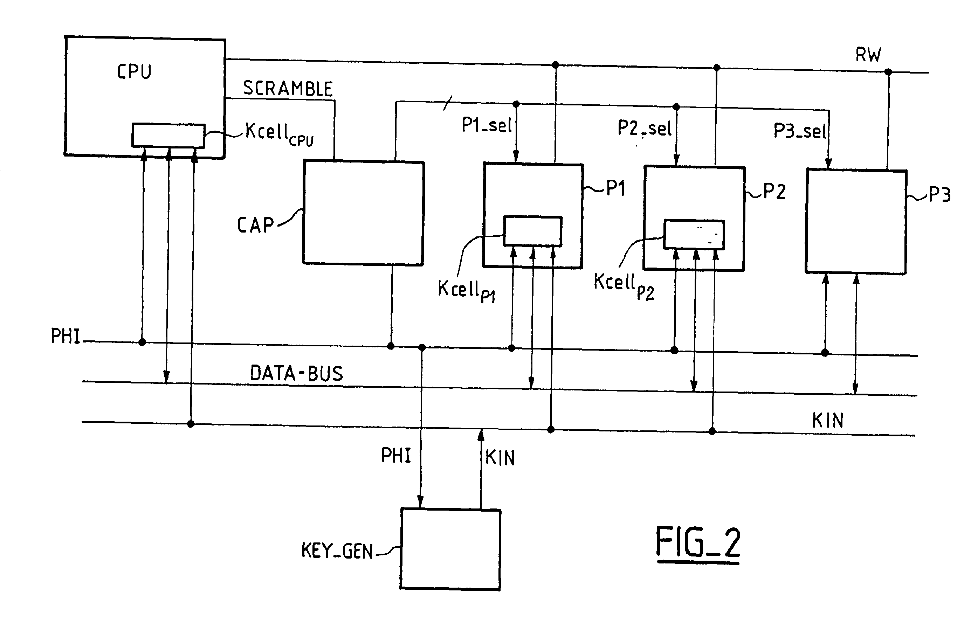

Ainsi, comme représenté sur la figure 2, dans une représentation simplifiée de l'architecture du composant de la figure 1, on place une cellule de cryptage/décryptage dans l'unité centrale et dans chacun des périphériques qui lisent ou écrivent des données sensibles sur le bus de données, dans l'exemple, dans les périphériques P1 et P2. Ces cellules sont référencées Kcell_{CPU}, Kcell_{P1}, et Kcell_{P2} sur la figure 2.

Le composant électronique selon l'invention comprend alors un générateur d'un signal aléatoire KIN, synchrone du signal d'horloge, sur une ligne de transmission unidirectionnelle, pour appliquer ce signal à chacune des cellules de cryptage/décryptage prévues dans le composant.

Chacune de ces cellules est en outre connectée en entrée/sortie au bus de données DATA-BUS.

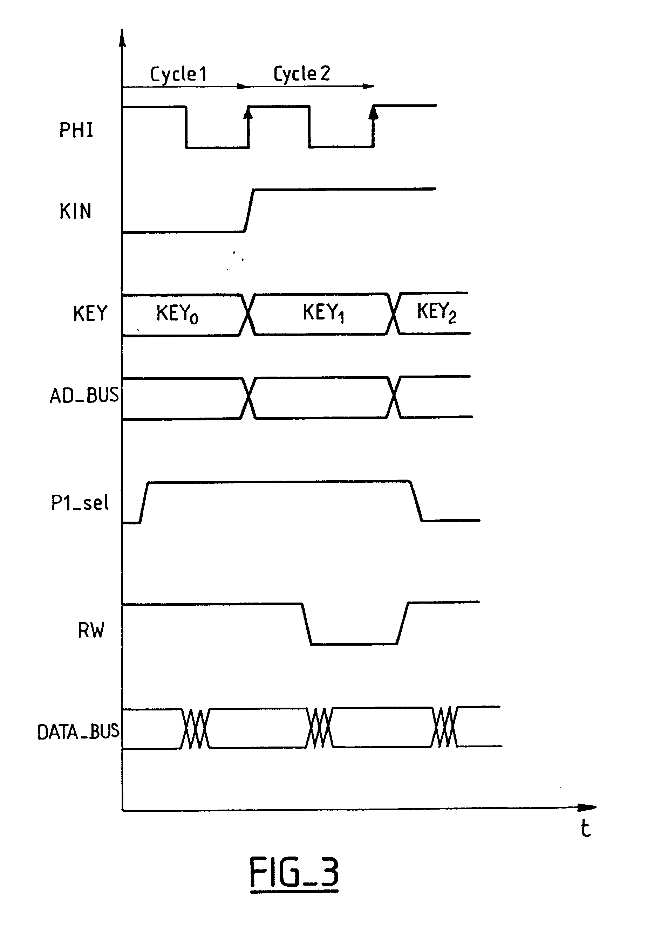

La figure 3 représente un chronogramme correspondant à une opération de lecture par l'unité centrale d'une donnée du périphérique P1 suivie d'une opération d'écriture d'une donnée par l'unité centrale dans le périphérique P1.

Ce chronogramme permet d'illustrer le principe de l'invention.

On a représenté sur ce chronogramme, deux cycles d'horloge, notés cycle 1 et cycle 2, le signal aléatoire synchrone K_{IN}, la clé secrète KEY calculée localement dans chaque cellule, le bus d'adresse AD-BUS, le signal de sélection P1-sel du périphérique P1, le signal de commande de lecture/écriture RW, dont le niveau bas correspond a une commande d'écriture, et le niveau haut, à une commande de lecture (par convention), et le bus de donnée DATA-BUS.

Si on considère le premier cycle horloge représenté (cycle 1), il lui correspond une valeur KEY₀ de clé secrète calculée localement dans chaque cellule à partir de la nouvelle valeur entrante du signal aléatoire KIN, 0 dans l'exemple.

Le périphérique P1 est sélectionné (P1-sel au niveau haut) en lecture (RW au niveau haut) à l'adresse appliquée sur le bus d'adresse AD-BUS. La cellule Kcell_{P1} du périphérique P1 fournit sur le bus la donnée lue à cette adresse, cryptée au moyen de la valeur courante de clé secrète KEY₀ calculée localement par cette cellule Kcell_{P1}. Cette donnée est transmise sur le bus sur le niveau bas du cycle 1 du signal d'horloge. La donnée cryptée est mémorisée dans un registre d'entrée de l'unité centrale CPU sur le front montant du cycle 1 du signal d'horloge et décryptée par la cellule Kcell_{CPU}, en utilisant la valeur courante KEY₀ de la clé secrète calculée localement par cette cellule Kcell_{CPU}.

Si on considère le deuxième cycle horloge représenté (cycle 2), il lui correspond une valeur KEY₁ de clé secrète calculée localement dans chaque cellule à partir de la nouvelle valeur entrante du signal aléatoire KIN, 1 dans l'exemple.

Le périphérique P1 est sélectionné (P1-sel au niveau haut) en écriture (RW au niveau bas) à l'adresse appliquée sur le bus d'adresse AD-BUS. La cellule Kcell_{CPU} de l'unité centrale fournit sur le bus la donnée à écrire à cette adresse, cryptée au moyen de la valeur courante de clé secrète KEY₁ calculée localement par cette cellule Kcell_{CPU}. Cette donnée est transmise sur le bus sur le niveau bas du cycle 2 du signal d'horloge. La donnée cryptée est mémorisée dans un registre d'entrée du périphérique P1 sur le front montant du cycle 2 du signal d'horloge et décryptée par la cellule Kcell_{P1}, en utilisant la valeur courante KEY₁ de la clé secrète calculée localement par cette cellule Kcell_{P1}.

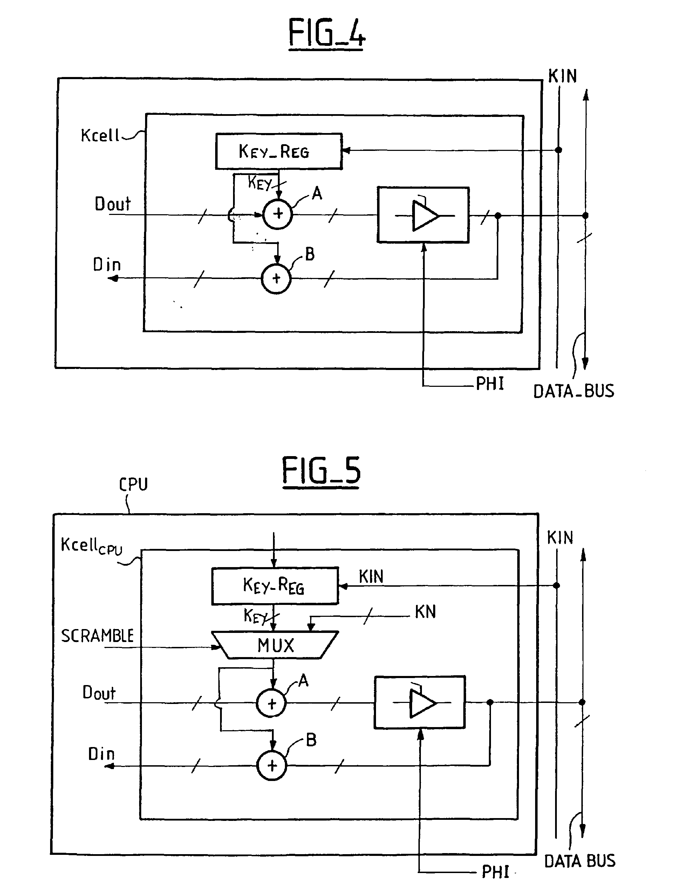

Un schéma bloc général d'une cellule de cryptage/décryptage Kcell selon l'invention est représenté sur la figure 4. Cette cellule est telle qu'elle calcule localement la valeur courante de la clé secrète, utilisée aussi bien pour le cryptage que pour le décryptage.

La cellule Kcell comprend un registre KEYREG, qui fournit la clé secrète KEY utilisée pour le cryptage et le décryptage. C'est un registre à décalage à n étages séquencé par le signal d'horloge PHI et qui reçoit en entrée de donnée le signal aléatoire KIN synchrone du signal d'horloge PHI. Le registre KEYREG fournit en sortie la valeur courante de la clé secrète KEY, pour le cycle d'horloge courant, dont la valeur est une fonction polynomiale des n valeurs les plus récentes du signal aléatoire KIN. La clé secrète prend ainsi une nouvelle valeur aléatoire à chaque cycle horloge.

Le registre est de préférence un registre à décalage à rétroaction, c'est à dire comprenant des portes logiques combinatoires pour appliquer le bit de sortie de certains étages en entrée d'autres étages du registre. Ceci permet de façon bien connue d'obtenir des fonctions polynomiales intéressantes. De préférence, on choisira d'implémenter une fonction polynomiale irréductible, pour améliorer la résistance du cryptage.

La cellule Kcell comprend un module A de cryptage et un module B de décryptage auxquels est appliquée la clé secrète KEY fournie par le registre KEYREG de la cellule.

Dans l'exemple, la fonction mathématique mise en oeuvre dans le module de cryptage est la fonction OU exclusif qui a la particularité d'être aussi la fonction à appliquer dans le module de décryptage, et d'être d'une mise en oeuvre aisée.

Le module A de cryptage reçoit en entrées une donnée interne Dout du circuit dans lequel est placée la cellule Kcell, et la clé secrète KEY produite localement par le registre KEYREG. Il délivre en sortie une donnée cryptée appliquée sur le bus de donnée DATA-BUS, via l'interface de sortie du circuit, symboliquement représenté sur la figure par un inverseur commandé.

Le module B de décryptage reçoit une donnée du bus de donnée, et la clé secrète KEY produite localement par le registre KEYREG. Il fournit en sortie une donnée décryptée Din.

Dans un perfectionnement représenté sur la figure 5, la cellule de cryptage/décryptage de l'unité centrale comprend en plus des éléments précédemment décrits, un circuit conditionnel, qui permet d'appliquer aux modules de cryptage et de décryptage, soit la clé secrète KEY soit une clé neutre KN, correspondant au neutre pour l'opération de cryptage considérée. Dans l'exemple de l'opération OU exclusif, ce neutre est la valeur nulle.

Ce perfectionnement permet de ne pas devoir implémenter une cellule de cryptage/décryptage dans tous les circuits connectés au bus de données dans le composant considéré, mais dans seulement ceux qui manipulent des données à protéger. On prévoit donc que le circuit PAC de contrôle d'accès des périphériques (représenté sur les figures 1 et 2) fournit un signal de validation de cryptage SCRAMBLE vers l'unité centrale CPU à chaque fois qu'il décode l'adresse d'un tel périphérique. En pratique, ce circuit de contrôle d'accès trouve cette information dans sa table d'allocation des adresses physiques.

On notera que l'information SCRAMBLE est dans l'exemple fournie par un circuit de contrôle d'accès placé en dehors de l'unité centrale, dans l'exemple d'architecture représenté sur les figures 1 et 2. Ceci n'est absolument limitatif. L'information SCRAMBLE est de façon plus générale fournie par un circuit de décodage d'adresse du composant.

Le circuit conditionnel de la cellule KCell_{CPU} selon le perfectionnement de l'invention comprend un multiplexeur MUX recevant en entrées la clé secrète KEY et la clé neutre KN et fournit en sortie la clé sélectionnée par le signal de validation de cryptage SCRAMBLE, appliquée aux modules de cyrptage et de décryptage de cette cellule Kcell_{CPU}.

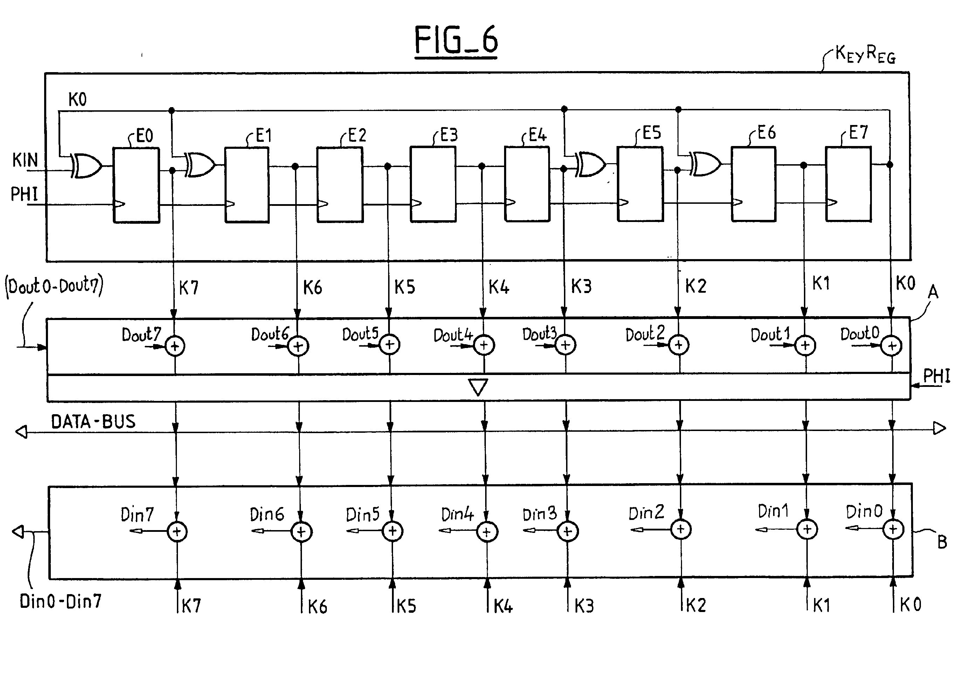

La figure 6 représente de façon un peu plus détaillée une cellule de cryptage/décryptage selon l'invention. Si on considère un bus de données 8 bits, la clé secrète doit comprendre au moins autant de bits. Le registre KEYREG comprend ainsi 8 étages pour fournir 8 bits de clé secrète, notés K0 à K7. Chacun de ces huit bits de données est appliqué dans le module A de cryptage et dans le module B de décryptage à une porte OU exclusif correspondante, recevant en entrée le bit de donnée à crypter ou décrypter, de même ordre. Ces modules comprennent ainsi chacun huit portes ou exclusif, une par bit.

Sur cette figure, on a représenté un exemple de réalisation d'un registre KEYREG du type à décalage, à rétroaction. On note E0 à E7 les 8 étages du registre, fournissant respectivement les bits K7 à K0 de la clé secrète. Ces étages sont de manière bien connue, des bascules de type D (flip-flop).

Dans l'exemple de réalisation représenté, l'étage E0 reçoit en entrée le signal aléatoire KIN combiné dans une porte OU exclusif au bit K0 fourni par le dernier étage E7 du registre, et délivre en sortie le bit K7. L'étage E1 reçoit en entrée le bit K7 combiné dans une porte OU exclusif au bit K0, et délivre en sortie le bit K6. Les étages E2, E3 et E4 reçoivent en entrée le bit fourni par l'étage précédent et délivrent en sortie les bits K5, K4 et K3 respectivement. L'étage E5 reçoit en entrée le bit K3 combiné dans une porte OU exclusif au bit K0, et délivre en sortie le bit K2. L'étage E6 reçoit en entrée le bit K2 combiné dans une porte OU exclusif au bit K0, et délivre en sortie le bit K1. L'étage E7 reçoit en entrée le bit K1 et délivre en sortie le bit K0.

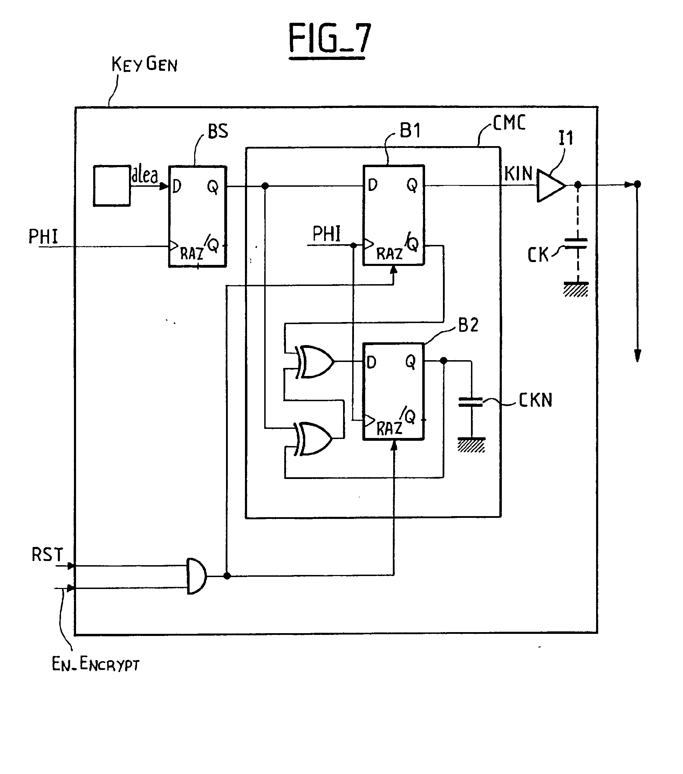

La figure 7 représente un exemple d'un générateur KEYGEN du signal aléatoire KIN.

Dans cet exemple, le générateur comprend un générateur pseudo aléatoire pour fournir une horloge aléatoire qui est appliquée en entrée D d'une bascule BS, pour être resynchronisée par le signal d'horloge PHI. Cette bascule reçoit donc sur son entrée horloge, le signal d'horloge PHI, et fournit en sortie Q, un signal aléatoire KIN synchrone du signal d'horloge PHI.

Il est a priori très difficile de déterminer la valeur prise par le signal aléatoire par observation de la consommation du composant due aux commutations sur la ligne de transmission du signal aléatoire synchrone KIN, car la capacité de cette ligne unidirectionnelle est en pratique assez faible.

Néanmoins, dans un perfectionnement de l'invention, on prévoit que le générateur du signal aléatoire synchrone comprend un circuit CMC de masquage de la consommation due aux commutations sur cette ligne de transmission. Dans l'exemple, ce circuit CMC est connecté entre la sortie de la bascule de synchronisation BS et la ligne de transmission.

Il existe différents circuits de masquage de consommation plus ou moins performants. Un exemple de réalisation non exhaustif est représenté sur la figure 5. Il comprend deux bascules de type D, B1 et B2. La première bascule B1 reçoit en entrée de donnée, la sortie Q de la bascule de synchronisation BS, et en entrée horloge, le signal d'horloge du bus PHI. La sortie Q est connectée par un élément d'interface (*driver*) I1 à la ligne de transmission. La sortie complémentaire /Q de la bascule B1 est appliquée à un circuit combinatoire dont la sortie S est appliquée en entrée de donnée de la deuxième bascule B2. La sortie Q de cette deuxième bascule B2 est connectée à un condensateur CKN dont la capacité correspond à la capacité parasite CK de la ligne de transmission vue par l'interface de sortie I1 du générateur KEYGEN.

Le circuit combinatoire comprend dans l'exemple une première porte OU recevant en entrées les sorties Q de la bascule de synchronisation et de la deuxième bascule B2 et une deuxième porte OU recevant en entrées la sortie de la première porte et la sortie complémentaire /Q de la première bascule B1. Avec un tel circuit combinatoire, on obtient dans les bascules B1 et B2 des transitions complémentaires, en sorte que la même consommation due à la transmission du signal KIN est observée à chaque cycle horloge.

Dans un dernier perfectionnement de l'invention, on prévoit que le signal aléatoire KIN n'est transmis sur la ligne de transmission qu'après activation par l'unité centrale d'un signal EN-ENCRYPT d'activation du cryptage. Ceci peut se faire simplement en forçant la réinitialisation des bascules. On a ainsi représenté sur la figure 7 une porte logique de type ET recevant en entrées le signal de réinitialisation RST du composant, actif à zéro, et le signal de validation EN-ENCRYPT. Ce signal est à zéro par défaut. Ainsi, après l'initialisation, tant que le signal de validation est à zéro, les bascules B1 et B2 sont forcées à zéro, et la ligne de transmission est forcée à zéro. Dès qu'il est mis à 1 par l'unité centrale, le signal aléatoire est transmis.

On notera que les deux perfectionnements du générateur du signal aléatoire synchrone, à savoir, le masquage de la consommation et la validation du cryptage, peuvent être mise en oeuvre indépendamment l'une de l'autre. Ainsi, dans certains composants, on pourra mettre en oeuvre un seul de ces perfectionnements. A cet effet, on notera que le perfectionnement concernant la validation du cryptage peut être mis en oeuvre indépendamment du circuit de masquage, par exemple au moyen d'une porte logique ET recevant en entrées le signal aléatoire synchrone KIN et le signal d'activation EN-ENCRYPT, et connecté en sortie sur la ligne de transmission.

Avec l'utilisation de cellules de cryptage/décryptage selon l'invention, on obtient ainsi une protection efficace des données sensibles. Cette protection est peu coûteuse en termes de conception, d'implémentation et de temps de traitement dans le composant. Notamment, la conception est facilitée par l'utilisation de cellules de cryptage/décryptage identiques dans tous les périphériques. La cellule de cryptage/décryptage de l'unité centrale comprend une option de validation du cryptage permettant de ne pas implanter une cellule nécessairement sur tous les périphériques. Le générateur du signal aléatoire quant à lui comprend deux options de réalisation, une option de masquage de consommation et une option d'activation de cryptage/décryptage.

## Revendications

1. Composant électronique comprenant un bus bidirectionnel (DATA-BUS) par lequel transitent des données entre des périphériques (P1, P2, P3) et une unité centrale (CPU) à la cadence d'un signal d'horloge (PHI), **caractérisé en ce que** l'unité centrale (CPU) et au moins l'un des périphériques (P1) comprennent chacun une cellule de cryptage/décryptage (Kcell) des données utilisant une même clé secrète (KEY), une valeur courante de ladite clé secrète étant produite localement à chaque cycle horloge dans chaque cellule à partir d'un signal aléatoire (KIN) synchrone du signal d'horloge (PHI), et appliqué à chacune des cellules par une ligne de transmission unidirectionnelle.

2. Composant électronique selon la revendication 1, **caractérisé en ce que** chaque cellule comprend un registre à décalage (KEYREG) recevant en entrée de donnée, ledit signal aléatoire synchrone (KIN) et en entrée horloge, le signal d'horloge (PHI) et délivrant en sortie, une valeur courante (KEY₀) de clé secrète à chaque cycle horloge.

3. Composant électronique selon la revendication 2, **caractérisé que** ledit registre à décalage est du type à rétroaction.

4. Composant électronique selon la revendication 3, **caractérisé en ce que** la fonction polynomiale correspondante du registre est irréductible.

5. Composant électronique selon l'une des revendications 1 à 4, **caractérisé en ce que** chaque cellule de cryptage/décryptage (Kcell) comprend un module de cryptage (A) recevant en entrées la valeur courante (KEY₀) de la clé secrète et une donnée (Dout) à transmettre sur le bus, pour fournir en sortie une donnée cryptée, et un module de décryptage (B) recevant en entrées la valeur courante (KEY₀) de la clé secrète et une donnée reçue du bus pour délivrer en sortie une donnée décryptée (Din).

6. Composant électronique selon la revendication 5, **caractérisé en ce que** la cellule de cryptage/décryptage (Kcell_{CPU}) de l'unité centrale (CPU) comprend en outre un circuit conditionnel pour appliquer la valeur courante de la clé secrète ou une clé neutre (KN) aux dits modules de cryptage (A) et de décryptage (B) selon un signal de validation de cryptage (SCRAMBLE) fourni par un circuit de décodage d'adresse (CAP) du composant.

7. Composant électronique selon la revendication 5 ou 6, **caractérisé en ce que** le module de cryptage et le module de décryptage utilisent la même fonction mathématique.

8. Composant électronique selon l'une quelconque des revendications précédentes, **caractérisé en ce qu'**un générateur dudit signal aléatoire synchrone (KIN) comprend un circuit (CMC) de masquage de la consommation.

9. Composant électronique selon la revendication 8, **caractérisé en ce que** ledit générateur comprend une bascule de type D (BS) recevant en entrée de donnée un signal binaire aléatoire et sur l'entrée horloge, le signal d'horloge du bus, pour fournir en sortie le signal aléatoire synchrone (KIN) et **en ce que** le circuit de masquage de consommation est connecté entre la sortie de la dite bascule et la ligne de transmission.

10. Composant électronique selon l'une quelconque des revendications précédentes, **caractérisé en ce que** ladite ligne de transmission du signal aléatoire synchrone (KIN) est forcée à zéro par défaut par l'unité centrale (CPU), un générateur de ce signal comprenant un circuit logique pour ne transmettre ledit signal aléatoire synchrone (KIN) sur la ligne de transmission qu'après activation d'un signal de commande (EN-ENCRYPT) par l'unité centrale.

11. Système comprenant un composant électronique selon l'une quelconque des revendications précédentes.

## Claims

1. An electronic component comprising a two-way bus (DATA-BUS) through which data elements travel in transit between peripherals (P1, P2, P3) and a central processing unit (CPU) at the pace of a clock signal (PHI), wherein the central processing unit (CPU) and at least one of the peripherals (P1) each comprise a data encryption/decryption cell (Kcell) using one and the same secret key (KEY), a current value of said secret key being produced locally in each cell at each clock cycle from a random signal (KIN) synchronous with the clock signal (PHI) and applied to each of the cells by a one-way transmission line.

2. An electronic component according to claim 1, wherein each cell comprises a shift register (KEYREG) receiving said synchronous random signal (KIN) as a data input and the clock signal (PHI) as a clock input and delivering, at output, a current secret key value (KEYo) at each clock cycle.

3. An electronic component according to claim 2, wherein said shift register is of the feedback type.

4. An electronic component according to claim 3, wherein the corresponding polynomial function of the register is irreducible.

5. An electronic component according to one of the claims 1 to 4, wherein each encryption/decryption cell (Kcell) comprises an encryption module (A) receiving, as inputs, the current value (KEYo) of the secret key and a data element (Dout) to be transmitted on the bus to give an encrypted data element at output and a decryption module (B) receiving, as inputs, the current value (KEY) of the secret key and a data element received from the bus to deliver a decrypted data element at output (Din).

6. An electronic component according to claim 5, wherein the encryption/decryption cell (Kcell_{CPU}) of the central processing unit (CPU) furthermore comprises a conditional circuit to apply the current value of the secret key or a neutral key (KN) to said encryption (A) and decryption (B) modules according to an encryption enabling signal (SCRAMBLE) given by a circuit (CAP) for decoding the address of the component.

7. An electronic component according to claim 5 or 6, wherein the encryption module and the decryption module use the same mathematical function.

8. An electronic component according to any of the above claims, wherein a generator of said synchronous random signal (KIN) comprises a consumption masking circuit (CMC).

9. An electronic component according to claim 8, wherein said generator comprises a D type flip-flop circuit (BS) receiving a random binary signal as an input and the clock signal from the bus at the clock input to give the synchronous random signal (KIN) at output, and wherein the consumption masking circuit is connected between the output of said flip-flop circuit and the transmission line.

10. An electronic component according to any of the above claims, wherein said synchronous random signal (KIN) transmission line is set at zero by default by the central processing unit (CPU), a generator of this signal comprising a logic circuit to transmit said synchronous random signal (KIN) on the transmission line only after the activation of a control signal (EN-ENCRYPT) by the central processing unit.

11. A system comprising an electronic component according to any of the foregoing claims.

## Patentansprüche

1. Elektronische Komponente mit einem bidirektionalen Bus (DATA-BUS), über den Daten zwischen Periphärgeräten (P1, P2, P3) und einer Zentraleinheit (CPU) mit dem Takt eines Taktsignals (PHI) übertragen werden, **dadurch gekennzeichnet, daß** die Zentraleinheit (CPU) und zumindest eines der Periphärgeräte (P1) jeweils eine Verschlüsselungs-/Entschlüsselungs-Zelle (Kcell) für Daten umfassen, die einen selben geheimen Schlüssel (KEY) verwenden, wobei ein momentaner Wert des geheimen Schlüssels bei jedem Taktzyklus in jeder Zelle ausgehend von einem Zufallssignal lokal erzeugt wird, das zum Taktsignal (PHI) synchron ist, und an jede der Zellen durch eine unidirektionale Übertragungsleitung angelegt wird.

2. Elektronische Komponente nach Anspruch 1, **dadurch gekennzeichnet, daß** jede Zelle ein Schieberegister (K_{EY}R_{EG}) umfaßt, das am Dateneingang das synchrone Zufallssignal (K_{IN}) und am Takteingang das Taktsignal (PHI) empfängt und am Ausgang bei jedem Taktzyklus einen momentanen Wert (KEY₀) des geheimen Schlüssels ausgibt.

3. Elektronische Komponente nach Anspruch 2, **dadurch gekennzeichnet, daß** das Schieberegister von der Art mit einer Rückführung ist.

4. Elektronische Komponente nach Anspruch 3, **dadurch gekennzeichnet, daß** die entsprechende Polynominalfunktion des Registers nicht reduzierbar ist.

5. Elektronische Komponente nach einem der Ansprüche 1 bis 4, **dadurch gekennzeichnet, daß** jede Verschlüsselungs-/Entschlüsselungs-Zelle (Kcell) ein Verschlüsselungsmodul (A), das an Eingängen den momentanen Wert (KEY₀) des geheimen Schlüssels und ein über den Bus zu übertragendes Datum (Dout) empfängt, um am Ausgang ein verschlüsseltes Datum zu liefern, und ein Entschlüsselungsmodul (B) umfaßt, das an Eingängen den momentanen Wert (KEY₀) des geheimen Schlüssels und ein vom Bus empfangenes Datum empfängt, um am Ausgang ein entschlüsseltes Datum (Din) zu liefern.

6. Elektronische Komponente nach Anspruch 5, **dadurch gekennzeichnet, daß** die Verschlüsselungs-/Entschlüsselungs-Zelle (Kcell_{CPU}) der Zentraleinheit (CPU) des weiteren eine bedingungsabhängige Schaltung umfaßt, um den momentanen Wert des geheimen Schlüssels oder einen neutralen Schlüssel (KN) an das Verschlüsselungsmodul (A) und Entschlüsselungsmodul (B) gemäß einem Verschlüsselungsvalidierungssignal (SCRAMBLE) anzulegen, das von einer Adressendecodierungsschaltung (CAP) der Komponente geliefert wird.

7. Elektronische Komponente nach Anspruch 5 oder 6, **dadurch gekennzeichnet, daß** das Verschlüsselungsmodul und das Entschlüsselungsmodul dieselbe mathematische Funktion verwenden.

8. Elektronische Komponente nach einem der vorherigen Ansprüche, **dadurch gekennzeichnet, daß** ein Generator des synchronen Zufallssignals (K_{IN}) eine Verbrauchs-Maskierungsschaltung (CMC) umfaßt.

9. Elektronische Komponente nach Anspruch 8, **dadurch gekennzeichnet, daß** der Generator eine bistabile Kippschaltung des Typs D (BS) umfaßt, die am Dateneingang ein binäres Zufallssignal und am Takteingang das Taktsignal des Busses empfängt, um am Ausgang das synchrone Zufallssignal (K_{IN}) zu liefern und dadurch, daß die Verbrauchs-Maskierungsschaltung zwischen dem Ausgang der bistabilen Kippschaltung und der Übertragungsleitung angeschlossen ist.

10. Elektronische Komponente nach einem der vorherigen Ansprüche, **dadurch gekennzeichnet, daß** die Übertragungsleitung des synchronen Zufallssignals (K_{IN}) durch die Zentraleinheit als Standardeinstellung auf Null forciert wird, ein Generator dieses Signals eine logische Schaltung umfaßt, um das synchrone Zufallssignal (K_{IN}) über die Übertragungsleitung nur nach einer Aktivierung eines Befehlssignals (E_{N-ENCRYPT}) durch die Zentraleinheit zu übertragen.

11. System, umfassend eine elektronische Komponente nach einem der vorherigen Ansprüche.
